(19) Europäisches Patentamt
European Patent Office
Office européen des brevets

(11) **EP 4 113 714 A1**

(12) **EUROPEAN PATENT APPLICATION**
published in accordance with Art. 153(4) EPC

(43) Date of publication:
**04.01.2023 Bulletin 2023/01**

(21) Application number: **20921958.3**

(22) Date of filing: **28.12.2020**

(51) International Patent Classification (IPC):
**H01M 50/20** (2021.01)      **H01M 10/613** (2014.01)
**H01M 10/6554** (2014.01)

(52) Cooperative Patent Classification (CPC):
**H01M 10/613; H01M 10/6554; H01M 50/20;**
Y02E 60/10

(86) International application number:
**PCT/JP2020/049254**

(87) International publication number:
**WO 2021/171782 (02.09.2021 Gazette 2021/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.02.2020 JP 2020034363**

(71) Applicant: **Zeon Corporation**
**Tokyo 100-8246 (JP)**

(72) Inventors:
• **MIYAZAKI Akihiko**
**Tokyo 100-8246 (JP)**
• **ISSHIKI Yasuhiro**
**Tokyo 100-8246 (JP)**
• **MOSAKI Shiho**
**Tokyo 100-8246 (JP)**

(74) Representative: **Hansen, Norbert**
**Maiwald GmbH**
**Elisenhof**
**Elisenstraße 3**
**80335 München (DE)**

(54) **INTERCELL SPACER AND BATTERY MODULE**

(57)     Provided is an intercell spacer that can maintain intercell distance even in a situation in which a cell has expanded inside a battery module at abnormally high temperature. The intercell spacer is arranged between battery cells that are adjacent to each other and includes a heat-resistant anti-compression portion having a Young's modulus of not less than a specific value at a specific temperature in a direction in which the battery cells are adjacent.

FIG. 1

**Description**

TECHNICAL FIELD

The present disclosure relates to an intercell spacer and a battery module.

BACKGROUND

Lithium ion batteries are used in a wide range of applications such as in-vehicle applications, electrical power leveling applications, and mobile applications from viewpoints such as energy density, power density, and durability. In actual use, such batteries are typically used in the form of a battery module having a plurality of cells arranged inside thereof. When a plurality of cells are arranged inside a battery module, it is important that even in a situation in which an unsafe event results in an abnormally high temperature or thermal runaway and cell expansion in one of the cells, intercell distance is maintained and thermal conduction is impeded such that cascade thermal runaway of other cells does not occur.

Patent Literature (PTL) 1 describes a heat-conducting, thermally expanding resin composition, etc., displaying thermal insulation performance that has excellent heat release properties during normal operation and that starts to expand at a comparatively low temperature during abnormal heating and can thereby prevent ignition caused by heat cascading to an adjacent battery. PTL 2 describes a battery cell having enhanced thermal stability for which a sheet-type member for promoting heat release from the battery cell extends to a sealing portion in a state in which the sheet-type member partially covers the battery cell. PTL 3 describes a heat-releasing resin sheet that has a function as a heat-releasing resin sheet arranged between a heat-releasing metal plate and a panel in an electronic device component or the like and that enables simple breakdown/dismantling of the electronic device component and the heat-releasing metal plate during use in recycling. PTL 4 describes a thermally expanding fireproof resin composition that can form a thermally insulating layer that suppresses a sudden temperature rise during heating while also providing separation between battery cells. PTL 5 describes the provision of a spacer between battery cells and also discloses the stacking of a large number of spacers and battery cells while preventing misalignment of the spacers and battery cells relative to one another. PTL 6 describes an assembled battery into which non-aqueous electrolyte secondary batteries are incorporated and that is compact and has excellent cooling efficiency and safety without reduction of gravimetric energy density and volumetric energy density thereof. PTL 7 describes a battery assembly including a temperature control mechanism that has excellent durability as a result of having a simple structure and that enables further enhancement and efficient use of the temperature control mechanism with respect to the battery assembly.

CITATION LIST

Patent Literature

PTL 1: WO2018/062172A1
PTL 2: JP2011-503793A
PTL 3: JP2002-134666A
PTL 4: JP2019-131654A
PTL 5: JP2007-299544A
PTL 6: JP2000-067825A
PTL 7: JP-H8-148187A

SUMMARY

(Technical Problem)

When a plurality of cells are arranged inside a battery module, there is a risk that, in a situation in which an unsafe event results in an abnormally high temperature or thermal runaway in one of the cells, this cell may expand such that the intercell distance can no longer be maintained, the expanded cell may come into contact with an adjacent cell, high temperature may be conducted to that cell, and cascading thermal runaway of cells may propagate. Consequently, it is necessary to suppress the occurrence of such risks.

(Solution to Problem)

The inventors conducted diligent investigation with the aim of solving the problem set forth above. The inventors discovered that with regards to an intercell spacer arranged between battery cells that are adjacent to each other, the inclusion of a heat-resistant anti-compression portion having a Young's modulus in the direction in which the battery cells are adjacent of not less than a specific value at a specific temperature makes it possible to maintain intercell distance even in a situation in which a cell has expanded inside a battery module at abnormally high temperature, and, in this manner, completed the present disclosure.

Accordingly, the present disclosure provides the intercell spacers and battery modules set forth below.

[1] An intercell spacer arranged between battery cells that are adjacent to each other, having a heat-resistant anti-compression portion having a Young's modulus of 10 MPa or more at a temperature of 300°C in a direction in which the battery cells are adjacent.

[2] The intercell spacer according to the foregoing [1], wherein the heat-resistant anti-compression portion is formed of at least one selected from the group consisting of a polyimide resin, a phenolic resin, an epoxy resin, alumina, zirconia, boehmite (AlOOH), gibbsite (Al(OH)$_3$), silicon oxide, magnesium oxide (magnesia), calcium oxide, titanium oxide (titania), barium titanate, alumina-silica complex oxide, aluminum nitride, boron nitride, silicon, diamond, barium sulfate, calcium fluoride, barium fluoride, kaolinite, montmorillonite, bentonite, mica, and feldspar.

[3] The intercell spacer according to the foregoing [1] or [2], wherein the heat-resistant anti-compression portion has a volume resistivity of $1 \times 10^3$ Ω·cm or more in the direction in which the battery cells are adjacent.

[4] The intercell spacer according to any one of the foregoing [1] to [3], wherein the heat-resistant anti-compression portion has a thermal conductivity of 100 W/m·K or less in the direction in which the battery cells are adjacent.

[5] The intercell spacer according to any one of the foregoing [1] to [4], further having a holding portion that at least partially covers the heat-resistant anti-compression portion.

[6] The intercell spacer according to the foregoing [5], wherein a thermal conductivity of the holding portion is higher than a thermal conductivity of the heat-resistant anti-compression portion.

[7] The intercell spacer according to the foregoing [5] or [6], wherein the holding portion has a portion that extends between surfaces that are in contact with the battery cells.

[8] The intercell spacer according to any one of the foregoing [5] to [7], wherein the heat-resistant anti-compression portion is embedded in the holding portion.

[9] The intercell spacer according to any one of the foregoing [5] to [7], wherein at least one of surfaces that are in contact with the battery cells is constituted by the heat-resistant anti-compression portion and the holding portion.

[10] The intercell spacer according to the foregoing [9], wherein both of the surfaces that are in contact with the battery cells are constituted by the heat-resistant anti-compression portion and the holding portion.

[11] The intercell spacer according to the foregoing [5] or [6], wherein a dimension of the heat-resistant anti-compression portion in the direction in which the battery cells are adjacent is larger than a dimension of the holding portion in the direction in which the battery cells are adjacent.

[12] The intercell spacer according to any one of the foregoing [5] to [11], wherein the holding portion comprises a member for which thermal conductivity irreversibly decreases upon heating.

[13] The intercell spacer according to the foregoing [12], wherein thermal conductivity of the holding portion upon heating to a temperature of 300°C is 0.1 times or less thermal conductivity of the holding portion in an unheated state at a temperature of 25°C.

[14] The intercell spacer according to the foregoing [12] or [13], wherein the holding portion comprises a member for which density decreases upon heating.

[15] The intercell spacer according to the foregoing [14], wherein the member for which density decreases upon heating is a thermally disappearing filler.

[16] The intercell spacer according to any one of the foregoing [5] to [11], wherein the holding portion comprises a member that contracts upon heating.

[17] The intercell spacer according to the foregoing [16], wherein the member that contracts upon heating is an elastomeric polymer.

[18] The intercell spacer according to any one of the foregoing [5] to [17], further having an elastic portion.

[19] The intercell spacer according to the foregoing [18], wherein the elastic portion has a smaller Young's modulus than the heat-resistant anti-compression portion at a temperature of 25°C.

[20] The intercell spacer according to the foregoing [18] or [19], wherein the heat-resistant anti-compression portion and the holding portion are arranged at a surface side of the elastic portion.

[21] The intercell spacer according to any one of the foregoing [18] to [20], wherein the holding portion contains a thermally disappearing filler, and a proportion of a volume occupied by the thermally disappearing filler relative to a volume of the holding portion is 50% or more.

[22] A battery module having:

a plurality of battery cells; and
the intercell spacer according to any one of the foregoing [1] to [21] arranged between adjacent battery cells.

[23] The battery module according to the foregoing [22], wherein a dimension of the heat-resistant anti-compression portion in the direction in which the battery cells are adjacent is 50% or more of a distance between the battery cells.

(Advantageous Effect)

According to the present disclosure, it is possible to provide an intercell spacer that can maintain intercell distance even in a situation in which a cell has expanded inside a battery module at abnormally high temperature.
Moreover, according to the present disclosure, it is possible to provide a battery module that can maintain intercell distance even in a situation in which a cell has expanded therein at abnormally high temperature.

BRIEF DESCRIPTION OF THE DRAWINGS

In the accompanying drawings:

FIG. 1 is a schematic diagram illustrating an example of a presently disclosed intercell spacer maintaining intercell distance in a situation in which a cell has expanded at abnormally high temperature;
FIG. 2 is a schematic diagram illustrating an example of a presently disclosed battery module;
FIG. 3 is a schematic diagram illustrating embodiments of a presently disclosed intercell spacer;
FIG. 4 is a schematic diagram illustrating embodiments of a presently disclosed intercell spacer;
FIG. 5 is a schematic diagram illustrating embodiments of a presently disclosed intercell spacer;
FIG. 6 is a schematic diagram illustrating embodiments of a presently disclosed intercell spacer;

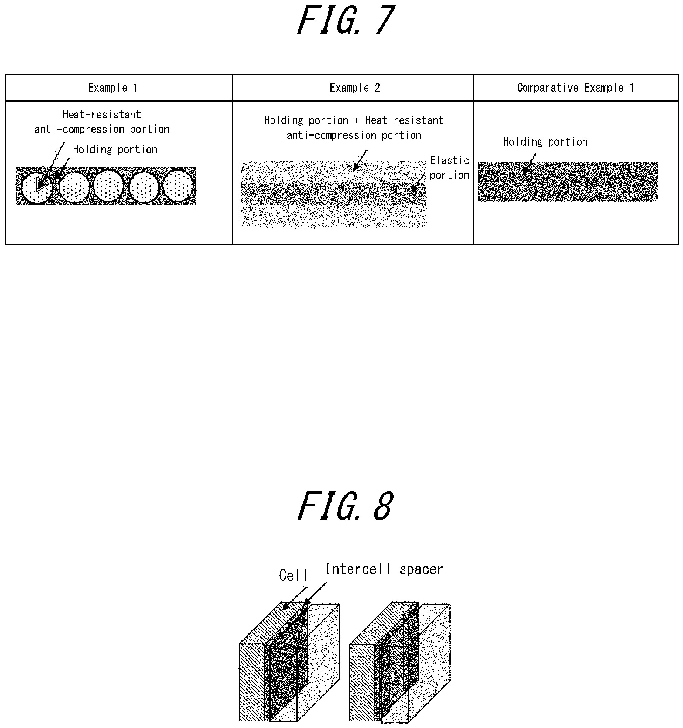

FIG. 7 is a schematic diagram of intercell spacers used in examples and a comparative example;
FIG. 8 is a schematic diagram illustrating an example of arrangement configuration of an intercell spacer in a presently disclosed battery module; and

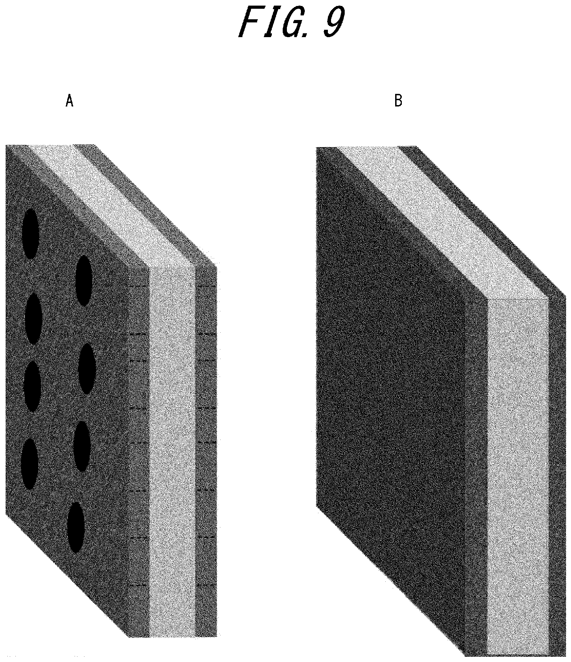

FIG. 9 is a schematic diagram of a presently disclosed intercell spacer including an elastic portion, where FIG. 9A illustrates a configuration in which a heat-resistant anti-compression portion and a holding portion are separate members, and FIG. 9B illustrates a configuration in which a heat-resistant anti-compression portion and a holding portion are mixed to form a mixed portion.

DETAILED DESCRIPTION

The following provides a detailed description of embodiments of the present disclosure.
A presently disclosed intercell spacer can be used in production of a presently disclosed battery module. The presently disclosed intercell spacer can be used as a member that is arranged between adjacent battery cells in a battery module that includes a plurality of battery cells. By being arranged in this manner, the presently disclosed intercell spacer can maintain intercell distance even in a situation in which a cell has expanded at abnormally high temperature.

(Intercell spacer)

The presently disclosed intercell spacer is an intercell spacer that is arranged between battery cells that are adjacent to each other and a feature thereof is that it includes a heat-resistant anti-compression portion having a Young's modulus in a direction in which the battery cells are adjacent (hereinafter, also referred to simply as the "adjacent direction" for convenience) of 10 MPa or more at a temperature of 300°C. By using the presently disclosed intercell spacer in a battery module, it is possible to maintain intercell distance even in a situation in which a cell has expanded inside the battery module at abnormally high temperature because the heat-resistant anti-compression portion has high elasticity in the adjacent direction.

<Heat-resistant anti-compression portion>

«Elasticity of heat-resistant anti-compression portion»

The "heat-resistant anti-compression portion" is a portion that has high elasticity in the adjacent direction and that is also heat resistant.

As a result of having high elasticity in the adjacent direction, the heat-resistant anti-compression portion can maintain intercell distance even in a situation in which a cell has expanded at abnormally high temperature because the heat-resistant anti-compression portion can withstand pressure from the expanded cell and resist compression thereof. Such high elasticity is a Young's modulus of 10 MPa or more at a temperature of 300°C, preferably a Young's modulus of 100 MPa or more at a temperature of 300°C, more preferably a Young's modulus of 1,000 MPa or more at a temperature of 300°C, and even more preferably a Young's modulus of 10,000 MPa or more at a temperature of 300°C. The Young's modulus can be measured by a method selected as appropriate from JIS R 1620, JIS K 6254, and JIS K 7161 in accordance with the material.

«Heat resistance of heat-resistant anti-compression portion»

Even in a situation in which the heat-resistant anti-compression portion comes into contact with cells at both sides as a result of cell expansion at abnormally high temperature, the heat-resistant anti-compression portion can inhibit high temperature of the cell that has reached an abnormally high temperature from being conducted to an adjacent cell and can suppress propagation of cascading thermal runaway of cells as a result of being heat resistant. Such heat resistance may be the heat-resistant anti-compression portion having a thermal conductivity in the adjacent direction of 100 W/m·K or less, preferably 50 W/m·K or less, more preferably 30 W/m·K or less, and even more preferably 10 W/m·K or less, for example. The thermal conductivity can be measured by ASTM D5470, for example.

«Electrical resistance of heat-resistant anti-compression portion»

The heat-resistant anti-compression portion preferably has high electrical resistance. Through the heat-resistant anti-compression portion having high electrical resistance, leakage of electrical current when the heat-resistant anti-compression portion is in contact with a cell can be suppressed. Such high electrical resistance may be the heat-resistant anti-compression portion having a volume resistivity in the adjacent direction of $1 \times 10^3 \, \Omega \cdot cm$ or more, preferably $1 \times 10^5 \, \Omega \cdot cm$ or more, more preferably $1 \times 10^7 \, \Omega \cdot cm$ or more, and even more preferably $1 \times 10^9 \, \Omega \cdot cm$ or more, for example. The volume resistivity can be measured by JIS K 7194 or JIS K 6911, for example.

«Material of heat-resistant anti-compression portion»

The material of the heat-resistant anti-compression portion is preferably a material having a high elasticity (Young's modulus) such as described above. The material may have a particulate form (for example, a spherical form) or rod-like form of not less than 0.1 mm and not more than 10 mm in diameter, for example, and may preferably have a spherical form. Alternatively, the material of the heat-resistant anti-compression portion may have a particulate form or a powdered form. The material of the heat-resistant anti-compression portion may, for example, be a heat-resistant resin such as a polyimide resin, a phenolic resin, or an epoxy resin or may be any of the following inorganic particles. Examples of inorganic particles that may be used include particles of oxides such as alumina, zirconia, hydrous aluminum oxide (boehmite (AlOOH) or gibbsite ($Al(OH)_3$)), silicon oxide, magnesium oxide (magnesia), calcium oxide, titanium oxide (titania), barium titanate ($BaTiO_3$), and alumina-silica complex oxide; particles of nitrides such as aluminum nitride and boron nitride; particles of covalently bonded crystals such as silicon and diamond; particles of sparingly soluble ionic crystals such as barium sulfate, calcium fluoride, and barium fluoride; fine particles of clays such as kaolinite, montmorillonite, and bentonite; and silicate minerals such as mica and feldspar. These particles may be subjected to element substitution, surface treatment, solid solution treatment, or the like as necessary. The material may be a mixture of any of the substances described above.

Note that the inorganic oxide particles described above are preferably surface treated using a reactive coupling agent. The reactive coupling agent used in this surface treatment can be any of those described in JP2015-218282A or WO2013/111345A1, for example. One of these reactive coupling agents may be used individually, or two or more of these reactive coupling agents may be used in combination in a freely selected ratio. Of these reactive coupling agents, titanium-based coupling agents (titanate coupling agents), silane coupling agents, and aluminum-based coupling agents (aluminate coupling agents) are preferable.

No specific limitations are placed on the method by which the inorganic oxide particles are surface treated using the reactive coupling agent. For example, the method of surface treatment may be a method in which the inorganic oxide particles are immersed in or mixed with a solution obtained by dissolving the reactive coupling agent in a solvent, and then the solvent is removed by any technique such as drying.

«Form of heat-resistant anti-compression portion»

The form of the heat-resistant anti-compression portion is not specifically limited and may be a cylindrical, square, spherical, rod-like, particulate, or powdered form, for example. In terms of dimensions of the heat-resistant anti-compression portion, the heat-resistant anti-compression portion may have a diameter of roughly 0.1 mm to 10 mm, for example, or may alternatively be smaller than 0.1 mm in diameter. For a heat-resistant anti-compression portion that is a constituent of the presently disclosed battery module, an adjacent direction dimension thereof may be set in consideration of the distance between battery cells where the heat-resistant anti-compression portion is arranged at a temperature in an unheated state (for example, 25°C) and also the minimum distance that it is desirable to maintain in a situation in which a cell has expanded at abnormally high temperature. Such a dimension may be 50% or more of the distance between battery cells, for example, and is preferably 60% or more, more preferably 70% or more, and even more preferably 80% or more of the distance between battery cells.

<Holding portion>

The presently disclosed intercell spacer may optionally further include a holding portion that at least partially covers the heat-resistant anti-compression portion. The "holding portion" is a portion that holds the heat-resistant anti-compression portion in the intercell spacer at a temperature in an unheated state. When the presently disclosed intercell spacer includes the holding portion, it is possible to arrange the heat-resistant anti-compression portion between cells during assembly of a battery module in a state in which the heat-resistant anti-compression portion is included in an integrated member, which makes it easier to fix the heat-resistant anti-compression portion in position inside the battery module.

The holding portion may optionally have a form such that it is in contact with cells at both sides inside a battery module at a temperature in an unheated state. Moreover, the holding portion may optionally have high thermal conductivity. Through the holding portion having a form such that it is in contact with cells at both sides inside a battery module at a temperature in an unheated state and also having high thermal conductivity, it is possible to cause thermal conduction between cells at a temperature in an unheated state and thereby achieve temperature equalization of cells inside the battery module.

«Form of holding portion and arrangement relationship thereof with heat-resistant anti-compression portion»

In the intercell spacer, the holding portion is arranged such as to at least partially cover the heat-resistant anti-compression portion. The form of the holding portion is not specifically limited so long as it is a form that solves the problem to which the present disclosure is directed.

The arrangement relationship of the holding portion and the heat-resistant anti-compression portion in the presently disclosed intercell spacer is not specifically limited so long as intercell distance can be maintained even in a situation in which a cell has expanded inside a battery module at abnormally high temperature.

As one example of the arrangement relationship of the holding portion and the heat-resistant anti-compression portion, the holding portion may include a portion that extends between surfaces that are in contact with the battery cells. Such an arrangement relationship may, for example, be as indicated below in any of Embodiments 2, 2-1, 2-2, 3, 4, and 5. Such an arrangement relationship prevents direct contact of cells at abnormally high temperature because the heat-resistant anti-compression portion comes into contact with these cells at both sides and resists the expansion pressure of these cells, and also makes it possible to achieve a thermal insulation effect between the cells at abnormally high temperature through reduction of thermal conductivity via the holding portion due to reduction of contact area between the holding portion and the cell surfaces or reduction of density of the holding portion. Moreover, the holding portion is in contact with the cells at both sides inside a battery module at a temperature in an unheated state, and thereby enables equalization of temperature of the cells inside the battery module.

As one example of the arrangement relationship of the holding portion and the heat-resistant anti-compression portion, the heat-resistant anti-compression portion may be embedded in the holding portion. Such an arrangement relationship may, for example, be as indicated below in Embodiment 3. Such an arrangement relationship prevents direct contact of cells at abnormally high temperature because the heat-resistant anti-compression portion comes into contact with these cells at both sides and resists the expansion pressure of these cells, and also makes it possible to achieve a thermal insulation effect between the cells at abnormally high temperature through reduction of thermal conductivity via the holding portion due to reduction of contact area between the holding portion and the cell surfaces or reduction of density of the holding portion.

As one example of the arrangement relationship of the holding portion and the heat-resistant anti-compression portion, at least one of the surfaces in contact with the battery cells may be constituted by the heat-resistant anti-compression portion and the holding portion. Such an arrangement relationship may, for example, be as indicated below in any of Embodiments 2, 2-1, 2-2, 2-3, 2-4, 2-5, 4, 5, 6, and 8.

In this arrangement relationship, both of the surfaces in contact with the battery cells may be constituted by the heat-resistant anti-compression portion and the holding portion. Such an arrangement relationship may, for example, be as indicated below in any of Embodiments 2, 2-1, 2-2, 2-3, 2-4, 2-5, 5, and 8.

As one example of the arrangement relationship of the holding portion and the heat-resistant anti-compression portion, the holding portion and the heat-resistant anti-compression portion may be mixed to form a "mixed portion". The mixed portion may, for example, be a mixture having a particulate or powdered heat-resistant anti-compression portion dispersed in a holding portion; a mixture or closely bonded body (pressure bonded body, fusion bonded body, etc.) of a particulate or powdered heat-resistant anti-compression portion with a particulate or powdered holding portion; or a dried product of a solution or dispersion liquid having a heat-resistant anti-compression portion and a holding portion dissolved or dispersed in a solvent (dispersion medium). In a case such as described above, the form of the heat-resistant anti-compression portion is not specifically limited so long as it is a form that is mixed with the holding portion, but is preferably a particulate form or a powdered form, and is more preferably a form having dimensions of smaller than 0.1 mm in diameter. The mixed portion may, for example, extend between the surfaces in contact with the battery cells such as indicated below in Embodiment 2-2. Alternatively, the mixed portion may, for example, be present at part of the surfaces in contact with the battery cells as indicated below in any of Embodiments 2-3, 2-4, and 2-5.

A size relationship of an adjacent direction dimension of the heat-resistant anti-compression portion and an adjacent direction dimension of the holding portion is not specifically limited so long as intercell distance can be maintained even in a situation in which a cell has expanded inside a battery module at abnormally high temperature. The adjacent direction dimension of the heat-resistant anti-compression portion may be larger than the adjacent direction dimension of the holding portion, may be the same as the adjacent direction dimension of the holding portion, or may be smaller than the adjacent direction dimension of the holding portion.

A configuration in which the adjacent direction dimension of the heat-resistant anti-compression portion is larger than the adjacent direction dimension of the holding portion is appropriate in a situation in which a cell cooling mechanism (air cooling, water cooling, etc.) utilizing a void is used in combination therewith. Such a relationship of the heat-resistant anti-compression portion and the holding portion may be as indicated in any of Embodiments 6 to 9.

When the adjacent direction dimension of the heat-resistant anti-compression portion is the same as the adjacent direction dimension of the holding portion, it is possible to ensure intercell distance at high temperature while also achieving good thermal conduction between cells. Such a relationship of the heat-resistant anti-compression portion and the holding portion may be as indicated in any of Embodiments 2 and 2-1.

When the adjacent direction dimension of the heat-resistant anti-compression portion is smaller than the adjacent direction dimension of the holding portion, good thermal conductivity at normal temperature can be achieved. Such a relationship of the heat-resistant anti-compression portion and the holding portion may be as indicated in any of Embodiments 2-2, 2-3, 2-4, 2-5, and 3 to 5.

«Thermal conductivity of holding portion»

The thermal conductivity of the holding portion is preferably higher than the thermal conductivity of the heat-resistant anti-compression portion. Such thermal conductivity may be 1 W/m·K or more, preferably 10 W/m·K or more, more preferably 20 W/m·K or more, and even more preferably 30 W/m·K or more, for example. The thermal conductivity can be measured by the previously described method, for example.

In a situation in which the holding portion is arranged inside a battery module, it is preferable that thermal conduction between cells through the holding portion is inhibited at high temperature. For example, a member for which thermal conductivity irreversibly decreases upon heating or a member that contracts upon heating may be used as a member constituting such a holding portion.

In a case in which the holding portion includes a member for which thermal conductivity irreversibly decreases upon heating, the thermal conductivity of the holding portion upon heating to a temperature of 300°C is preferably 0.1 times or less the thermal conductivity thereof in an unheated state at a temperature of 25°C, more preferably 0.01 times or less the thermal conductivity thereof in an unheated state at a temperature of 25°C, and even more preferably 0.001 times or less the thermal conductivity thereof in an unheated state at a temperature of 25°C.

The "member for which thermal conductivity irreversibly decreases upon heating" is a member for which thermal conductivity irreversibly decreases at a specific temperature (high temperature). This temperature may be a temperature corresponding to when a cell is at abnormally high temperature. Note that with regards to the "member for which thermal conductivity irreversibly decreases upon heating", it is not necessary for the thermal conductivity thereof to irreversibly decrease at a lower temperature than the temperature described above. The member for which thermal conductivity irreversibly decreases upon heating may, for example, be a member for which density decreases upon heating to not lower than a specific temperature due to an increase of voids therein, or the like. Such a member can be obtained by adopting a configuration including a thermally disappearing filler, for example. The "thermally disappearing filler" is a filler formed of a material that causes the formation of voids at a specific temperature through vaporization, decomposition, or the like, and preferably has a particulate form. It is not necessary for the thermally disappearing filler to cause the formation of voids through vaporization, decomposition, or the like at a lower temperature than the temperature described above. Through such a configuration, a region that was occupied by the thermally disappearing filler is replaced by a void upon heating, thereby reducing the density of the holding portion, and irreversibly reducing the thermal conductivity of the holding portion. Examples of thermally disappearing fillers include blowing agents such as a mixture of dinitrosopentamethylenetetramine (DTP), azodicarbonamide (ADCA), p,p'-oxybis(benzenesulfonyl hydrazide) (OBSH), and sodium hydrogen carbonate and a mixture of DTP, ADCA, OBSH, HDCA, BA/AC, and sodium hydrogen carbonate; and sublimable resins such as melamine and melamine cyanurate. The dissipation temperature of the thermally disappearing filler may be 80°C or higher, preferably 100°C or higher, and more preferably 120°C or higher, for example, and may be 500°C or lower, preferably 350°C or lower, and more preferably 250°C or lower, for example. The average particle diameter of the thermally disappearing filler may be 0.1 $\mu$m or more, preferably 0.3 $\mu$m or more, and more preferably 0.5 $\mu$m or more, for example, and may be 10 $\mu$m or less, preferably 5 $\mu$m or less, and more preferably 3 $\mu$m or less, for example. In a case in which the presently disclosed intercell spacer does not include a subsequently described elastic portion, the proportion of volume occupied by the thermally disappearing filler relative to the volume of the holding portion may be 5% or more, preferably 10% or more, and more preferably 20% or more, for example, and may be 60% or less, preferably 50% or less, and more preferably 40% or less, for example. Moreover, in a case in which the presently disclosed intercell spacer includes an elastic portion as described below, the proportion of volume occupied by the thermally disappearing filler relative to the volume of the holding portion may be higher than the proportion set forth above, may be 50% or more, preferably 60% or more, and more preferably 70% or more, for example, and may be 99% or less, preferably 95% or less, and more preferably 90% or less, for example.

In a case in which the holding portion includes a member that contracts upon heating, the volume of the holding portion upon heating to a temperature of 300°C is preferably 0.95 times or less the volume thereof in an unheated state at a temperature of 25°C, more preferably 0.9 times or less the volume thereof in an unheated state at a temperature of 25°C, and even more preferably 0.8 times or less the volume thereof in an unheated state at a temperature of 25°C.

The member that contracts upon heating may, for example, be an elastomeric polymer. The elastomeric polymer may, for example, be an acrylic polymer, hydrogenated nitrile rubber, polyethylene, polypropylene, ABS resin, polyvinyl acetate, or polystyrene.

«Elasticity of holding portion»

The holding portion preferably has low elasticity in the adjacent direction. Through the holding portion having low elasticity in the adjacent direction in a case in which the holding portion includes a member that contracts upon heating, this inhibits the holding portion from returning from a contracted state after it has contracted upon heating, and can contribute to reducing thermal conductivity of the holding portion at abnormally high temperature. Such low elasticity may, for example, be a Young's modulus of 1,000 MPa or less, preferably 100 MPa or less, and more preferably 10 MPa or less at a temperature of 300°C.

Permanent strain of the holding portion is preferably 1% to 20%. Through a permanent strain that is within a range such as set forth above, an effect of relieving stress due to expansion after cell use can be expected. The permanent strain can be measured by JIS K 6262, for example.

«Electrical resistance of holding portion»

The holding portion preferably has high electrical resistance. Through the holding portion having high electrical resistance, leakage of electrical current when the holding portion is in contact with a cell can be suppressed. Such high resistance may be the holding portion having a volume resistivity in the adjacent direction of 1,000 $\Omega\cdot$cm or more, preferably $10^4 \Omega\cdot$cm or more, more preferably $10^5 \Omega\cdot$cm or more, and even more preferably $10^6 \Omega\cdot$cm or more, for example.

«Material of holding portion»

The material of the holding portion is not specifically limited so long as it can at least partially cover the heat-resistant anti-compression portion. Examples of such materials include a thermally disappearing filler and an elastomeric polymer such as previously described. Such materials may be used individually or as a composite material. A high thermal conductivity filler may be further compounded, for example, in order to provide the holding portion with high thermal conductivity. The high thermal conductivity filler may be silicon nitride, aluminum nitride, or boron nitride high thermal conductivity ceramic, for example. The average particle diameter of the high thermal conductivity filler may be 0.01 $\mu$m or more, preferably 0.1 $\mu$m or more, and more preferably 1 $\mu$m or more, for example, and may be 1,000 $\mu$m or less, preferably 300 $\mu$m or less, and more preferably 100 $\mu$m or less, for example. The proportion constituted by the high thermal conductivity filler relative to the holding portion may be 20 mass% or more, preferably 40 mass% or more, and more preferably 50 mass% or more, for example, and may be 95 mass% or less, preferably 90 mass% or less, and more preferably 80 mass% or less, for example.

<Elastic portion>

In a case in which the presently disclosed intercell spacer includes the holding portion, the presently disclosed intercell spacer may optionally further include an elastic portion. The "elastic portion" is a portion for supporting the holding portion that is elastic and that substantially maintains its form and dimensions in a temperature range of not lower than -30°C and not higher than 80°C. As a result of the elastic portion substantially maintaining the form and dimensions thereof at both normal temperature and high temperature, it is possible to ensure a minimum thickness of the intercell spacer even in a situation in which the holding portion has contracted at high temperature. Moreover, as a result of the elastic portion being elastic, the elastic portion can function as a cushioning material for an expanding or contracting cell. Through the above, the elastic portion can function as a cushioning material for cell expansion and contraction at normal temperature. This makes it possible to use a material in which the proportional content of a thermally disappearing filler is increased (preferably a material substantially formed of a thermally disappearing filler) in the holding portion. By using a material in which the proportional content of a thermally disappearing filler is increased as the holding portion in this manner, it is possible to increase the degree of contraction at abnormally high temperature and to more effectively increase thermal insulation.

«Form of elastic portion and arrangement relationship thereof with heat-resistant anti-compression portion and holding portion»

In the intercell spacer, the elastic portion is arranged such that the intercell spacer can be arranged between cells and such that the holding portion and the heat-resistant anti-compression portion are included at surfaces at both sides facing the cells. The form of the elastic portion is not specifically limited and can be any form that can solve the problem to which the present disclosure is directed (i.e., any form that enables arrangement of the intercell spacer between cells and inclusion of the holding portion and the heat-resistant anti-compression portion at surfaces facing the cells).

The arrangement relationship of the elastic portion with the heat-resistant anti-compression portion and the holding portion in the presently disclosed intercell spacer is not specifically limited so long as the elastic portion can function as a cushioning material for cell expansion and contraction at normal temperature.

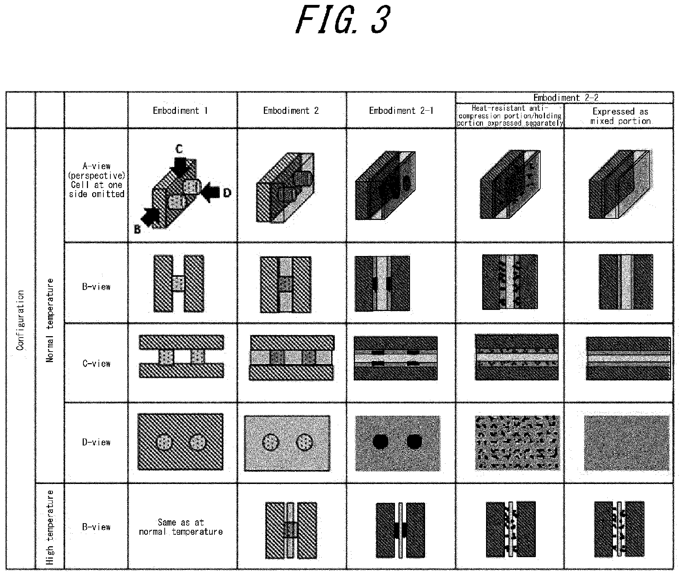

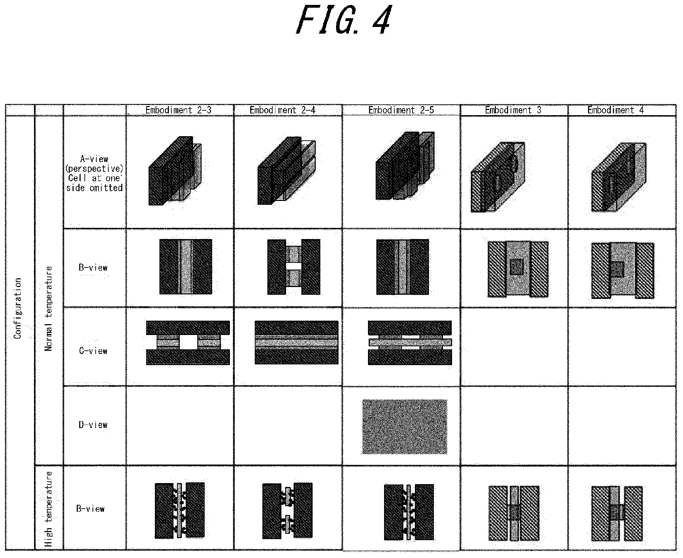

As one example of the arrangement relationship of the elastic portion with the heat-resistant anti-compression portion and the holding portion, the heat-resistant anti-compression portion and the holding portion may be arranged at a surface side (i.e., cell side) of the elastic portion. In this arrangement relationship, the heat-resistant anti-compression portion and the holding portion may be arranged such as to cover the entirety of a surface side of the elastic portion or may be arranged such as to cover part of a surface side of the elastic portion, for example. In the case of an arrangement in which the heat-resistant anti-compression portion and the holding portion cover the entirety of a surface side of the elastic portion, the elastic portion preferably has a form that is present in a region between a portion formed by the anti-compression portion and the holding portion at one side in the adjacent direction and a portion formed by the anti-compression portion and the holding portion at the other side in the adjacent direction. Such an arrangement relationship may, for example, be as indicated below in any of Embodiments 2-1 to 2-5. In Embodiments 2-1 and 2-2, the elastic portion has a surface form matching an extension surface where the heat-resistant anti-compression portion and the holding portion are in contact with a battery cell. Note that in the schematic diagrams of Embodiment 2-2 in FIG. 3, a portion formed of the heat-resistant anti-compression portion and the holding portion is expressed by a microscopic diagram (left diagram) in which both the heat-resistant anti-compression portion and the holding portion are expressed separately and a macroscopic diagram (right diagram) in which the heat-resistant anti-compression portion and the holding portion are expressed as a portion resulting from mixing of the heat-resistant anti-compression portion and the holding portion to form a subsequently described mixed portion. In Embodiments 2-3 and 2-4, the elastic portion has a surface form matching a surface form (part of an extension surface) where the heat-resistant anti-compression portion and the holding portion are in contact with a battery cell. An arrangement in which the heat-resistant anti-compression portion and the holding portion partially cover a surface side of the elastic portion may, for example, be as indicated below in Embodiment 2-5. In schematic diagrams of Embodiments 2-3, 2-4, and 2-5 in FIG. 4, a portion formed of the heat-resistant anti-compression portion and the holding portion is macroscopically expressed as a portion resulting from mixing of the heat-resistant anti-compression portion and the holding portion to form a mixed portion. Through such an arrangement relationship, the elastic portion can support the heat-resistant anti-compression portion and the holding portion, and intercell distance can be maintained even in a situation in which the holding portion has contracted at abnormally high temperature.

A size relationship of an adjacent direction dimension (total dimension) of the elastic portion and an adjacent direction dimension (total dimension) of the portion formed of the heat-resistant anti-compression portion and the holding portion is not specifically limited so long as it is possible to maintain intercell distance even in a situation in which a cell has expanded inside a battery module at abnormally high temperature. The adjacent direction dimension of the elastic portion may be larger than the adjacent direction dimension of the portion formed of the heat-resistant anti-compression portion and the holding portion, may be the same as the adjacent direction dimension of the portion formed of the heat-resistant anti-compression portion and the holding portion, or may be smaller than the adjacent direction dimension of the portion formed of the heat-resistant anti-compression portion and the holding portion.

The adjacent direction dimension of the elastic portion may be 0.3 times or more, preferably 0.5 times or more, and more preferably 0.8 times or more the adjacent direction dimension of the portion formed of the heat-resistant anti-compression portion and the holding portion, for example, and may be 0.99 times or less, preferably 0.95 times or less, and more preferably 0.90 times or less the adjacent direction dimension of the portion formed of the heat-resistant anti-compression portion and the holding portion. A larger adjacent direction dimension for the elastic portion relative to the adjacent direction dimension of the portion formed of the heat-resistant anti-compression portion and the holding portion is more suitable from a viewpoint of cushioning function against cell expansion and contraction. A smaller adjacent direction dimension for the elastic portion relative to the adjacent direction dimension of the portion formed of the heat-resistant anti-compression portion and the holding portion is more suitable from a viewpoint of maintaining intercell distance at high temperature.

«Elasticity of elastic portion»

As a result of the elastic portion having high elasticity in the adjacent direction, intercell distance can be maintained even in a situation in which a cell has expanded at abnormally high temperature because pressure from the expanded cell can be resisted, and compression of the heat-resistant anti-compression portion can be inhibited. Moreover, from a viewpoint of the elastic portion functioning as a cushioning material for cell expansion and contraction at both normal temperature and high temperature, the elastic portion preferably has lower elasticity than the heat-resistant anti-compression portion (i.e., the Young's modulus of the elastic portion is preferably smaller than the Young's modulus of the heat-resistant anti-compression portion at a temperature of 25°C). The Young's modulus of the elastic portion at a temperature of 25°C is preferably 1 MPa or more, more preferably 2 MPa or more, and even more preferably 3 MPa or more, and is preferably 100 MPa or less, more preferably 30 MPa or less, and even more preferably 15 MPa or less. The Young's modulus can be measured as appropriate by the previously described method, for example.

«Electrical resistance of elastic portion»

The elastic portion preferably has high electrical resistance. Through the elastic portion having high electrical resistance, leakage of electrical current via the elastic portion in a situation in which the holding portion is in contact with a cell can be suppressed. Such high electrical resistance may be the elastic portion having a volume resistivity in the adjacent direction of 1,000 $\Omega \cdot cm$ or more, preferably $10^4$ $\Omega \cdot cm$ or more, more preferably $10^5$ $\Omega \cdot cm$ or more, and even more preferably $10^6$ $\Omega \cdot cm$ or more, for example.

«Material of elastic portion»

The material of the elastic portion is not specifically limited so long as it can at least partially cover the heat-resistant anti-compression portion. Examples of such materials include various rubber materials such as natural rubber, isoprene rubber, styrene butadiene rubber, butadiene rubber, chloroprene rubber, butyl rubber, nitrile rubber, ethylene-propylene rubber, chlorosulfonated polyethylene rubber, acrylic rubber, urethane rubber, silicone rubber, fluororubber, and polysulfide rubber, and resin materials such as polyethylene, polypropylene, polystyrene, polyvinyl chloride, ABS resin, acrylic resin, polyethylene terephthalate, and phenolic resin. Such materials may be used individually or as a composite material. It is preferable that the content of a thermally disappearing filler in the elastic portion is as low as possible, and more preferable that the elastic portion does not substantially contain a thermally disappearing filler.

«Type of holding portion used with elastic portion, etc.»

In a case in which the presently disclosed intercell spacer includes the elastic portion, the holding portion that is used in the presently disclosed intercell spacer preferably contains a thermally disappearing filler. Examples of thermally disappearing fillers that may be used are as previously described. In this case, it is possible to increase the proportional content of the thermally disappearing filler in the holding portion because intercell distance can be maintained by the elastic portion even when the thermally disappearing filler is disappearing through heating. Moreover, in this case, the proportion of volume occupied by the thermally disappearing filler relative to the volume of the holding portion may be 50% or more, preferably 60% or more, and more preferably 70% or more, for example, and may be 99% or less, preferably 95% or less, and more preferably 90% or less, for example.

<Structure of intercell spacer>

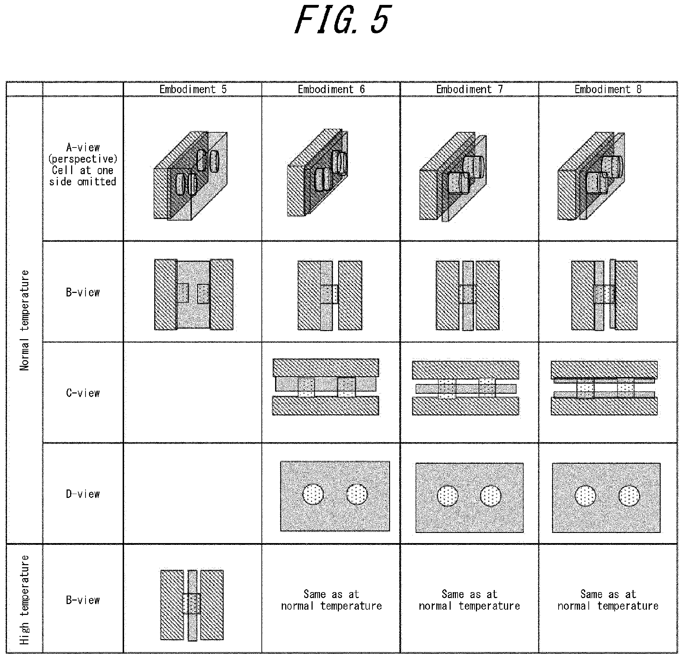

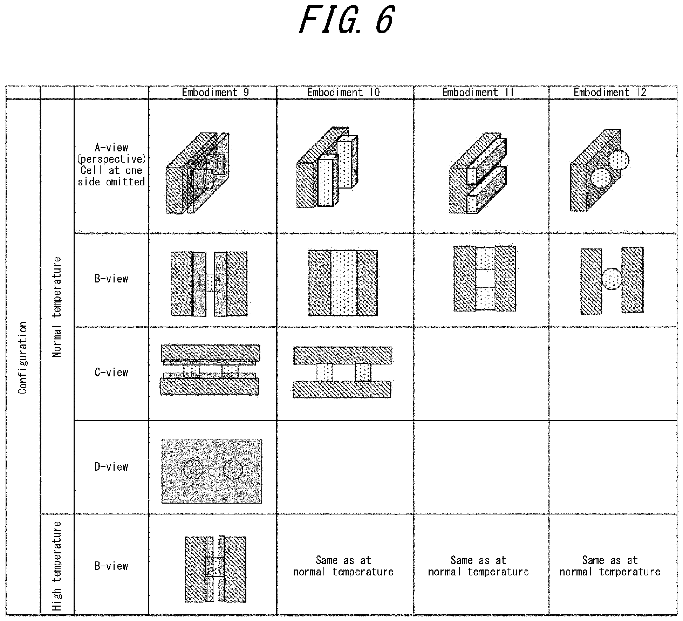

Production examples of the presently disclosed intercell spacer are presented in Embodiments 1, 2, 2-1 to 2-5, and 3 to 12 (FIGS. 3 to 6 and Table 1). The number of heat-resistant anti-compression portions in the intercell spacer may be 1 or more, and is preferably 2 or more, but is not specifically limited.

In the case of a structure in which both cells are in contact with a continuous holding portion (Embodiments 2, 2-1 to 2-5, 3, 4, and 5), it is possible achieve temperature equalization of cells inside a battery module at a temperature in an unheated state through thermal conduction via the holding portion.

In the case of a structure in which both cells are not in contact with a continuous holding portion (Embodiments 6 to 9) and a structure in which the presently disclosed intercell spacer does not include a holding portion (Embodiments 1 and 10 to 12), temperature stabilization of cells can be achieved through intercell air cooling or intercell water cooling due to the presence of a void between the cells.

Table 1-1

Production examples of presently disclosed intercell spacer

| | | Embodiment 1 | Embodiment 2 | Embodiment 2-1 | Embodiment 2-2 | Embodiment 2-3 | Embodiment 2-4 | Embodiment 2-5 | Embodiment 3 |
|---|---|---|---|---|---|---|---|---|---|
| Outline of structure | | Heat-resistant anti-compression portion in contact with cells at both sides | Heat-resistant anti-compression portion completely embedded in holding portion / Heat-resistant anti-compression portion in contact with cells at both sides / Holding portion in contact with cells at both sides | Heat-resistant anti-compression portion completely embedded in holding portion / Heat-resistant anti-compression portion in contact with cells at both sides / Holding portion in contact with cells at both sides / Heat-resistant anti-compression portion/holding portion positioned at surface side of elastic portion | Heat-resistant anti-compression portion mixed with holding portion / Mixed portion of holding portion/heat-resistant anti-compression portion in contact with cells at both sides / Heat-resistant anti-compression portion/holding portion positioned at surface side of elastic portion | Heat-resistant anti-compression portion mixed with holding portion / Mixed portion of holding portion/heat-resistant anti-compression portion in contact with cells at both sides / Heat-resistant anti-compression portion/holding portion positioned at surface side of elastic portion | Heat-resistant anti-compression portion mixed with holding portion / Mixed portion of holding portion/heat-resistant anti-compression portion in contact with cells at both sides / Heat-resistant anti-compression portion/holding portion positioned at surface side of elastic portion | Heat-resistant anti-compression portion mixed with holding portion / Mixed portion of holding portion/heat-resistant anti-compression portion in contact with cells at both sides / Heat-resistant anti-compression portion/holding portion positioned at surface side of elastic portion | Heat-resistant anti-compression portion completely embedded in holding portion / Heat-resistant anti-compression portion not in contact with cells / Holding portion in contact with cells at both sides |
| Means of temperature stabilization at normal temperature | Intercell air cooling or intercell water cooling | Yes | | | | Yes | Yes | Yes | |
| | Thermal conduction by holding portion at normal temperature | | Yes | Yes | Yes | | | | Yes |
| Means of thermal insulation at high temperature (thermal insulation through combination of 1 and 2 or 3) | Intercell thermal insulation method 1 (common) | Heat-resistant anti-compression portion having high heat resistance in contact with cells at both sides and resists cell expansion pressure (pressure of adjacent cells moving closer together) to prevent direct contact of cells | | | | | | | |
| | Intercell thermal insulation method 2 | - | Contact area of holding portion with cell surface decreases and thereby reduces thermal conductivity | Contact area of holding portion with cell surface decreases and thereby reduces thermal conductivity | Contact area of holding portion with cell surface decreases and thereby reduces thermal conductivity | Contact area of holding portion with cell surface decreases and thereby reduces thermal conductivity | Contact area of holding portion with cell surface decreases and thereby reduces thermal conductivity | Contact area of holding portion with cell surface decreases and thereby reduces thermal conductivity | Contact area of holding portion with cell surface decreases and thereby reduces thermal conductivity |
| | Intercell thermal insulation method 3 | - | Density of holding portion decreases and thereby reduces thermal conductivity | Density of holding portion decreases and thereby reduces thermal conductivity | Density of holding portion decreases and thereby reduces thermal conductivity | Density of holding portion decreases and thereby reduces thermal conductivity | Density of holding portion decreases and thereby reduces thermal conductivity | Density of holding portion decreases and thereby reduces thermal conductivity | Density of holding portion decreases and thereby reduces thermal conductivity |

Table 1-2
Contd.

| | | Embodiment 4 | Embodiment 5 | Embodiment 6 | Embodiment 7 | Embodiment 8 | Embodiment 9 | Embodiment 10 | Embodiment 11 | Embodiment 12 |
|---|---|---|---|---|---|---|---|---|---|---|
| Outline of structure | | Heat-resistant anti-compression portion completely embedded in holding portion / Heat-resistant anti-compression portion in contact with cell at one side / Holding portion in contact with cells at both sides | Heat-resistant anti-compression portion completely embedded in holding portion / Heat-resistant anti-compression portion in contact with cell at one side / Holding portion in contact with cells at both sides | Heat-resistant anti-compression portion embedded in holding portion at one side / Heat-resistant anti-compression portion in contact with cells at both sides / Holding portion in contact with cell at one side | Heat-resistant anti-compression portion embedded in holding portion at center / Heat-resistant anti-compression portion in contact with cells at both sides / Holding portion not in contact with cells | Heat-resistant anti-compression portion embedded in holding portion at both sides / Heat-resistant anti-compression portion in contact with cells at both sides / Holding portion in contact with cells at both sides | Heat-resistant anti-compression portion embedded in holding portion at both sides / Heat-resistant anti-compression portion not in contact with cells / Holding portion in contact with cells at both sides | Heat-resistant anti-compression portion in contact with cells at both sides / *Same variation as for cylindrical type | Heat-resistant anti-compression portion in contact with cells at both sides / *Same variation as for cylindrical type | Heat-resistant anti-compression portion in contact with cells at both sides / *Same variation as for cylindrical type |
| Means of temperature stabilization at normal temperature | Intercell air cooling or intercell water cooling | | | Yes | Yes | Yes | Yes | Yes | Yes | Yes |
| | Thermal conduction by holding portion at normal temperature | Yes | Yes | | | | | | | |
| Means of thermal insulation at high temperature (thermal insulation through combination of 1 and 2 or 3) | Intercell thermal insulation method 1 (common) | Heat-resistant anti-compression portion having high heat resistance in contact with cells at both sides and resists cell expansion pressure (pressure of adjacent cells moving closer together) to prevent direct contact of cells | | | | | | | | |
| | Intercell thermal insulation method 2 | Contact area of holding portion with cell surface decreases and thereby reduces thermal conductivity | Contact area of holding portion with cell surface decreases and thereby reduces thermal conductivity | - | - | - | - | - | - | - |
| | Intercell thermal insulation method 3 | Density of holding portion decreases and thereby reduces thermal conductivity | Density of holding portion decreases and thereby reduces thermal conductivity | - | - | - | - | - | - | - |

(Battery module)

The presently disclosed battery module includes a plurality of battery cells and has the presently disclosed intercell spacer arranged between adjacent battery cells.

An adjacent direction dimension of the heat-resistant anti-compression portion that is a constituent of the presently disclosed battery module may be set in consideration of the distance between the battery cells where the heat-resistant anti-compression portion is arranged at a temperature in an unheated state (for example, 25°C) and the minimum distance that it is desirable to ensure between the cells in a situation in which a cell has expanded at abnormally high temperature. Such a dimension may, for example, be 50% or more of the distance between the battery cells, and is preferably 60% or more, more preferably 70% or more, and even more preferably 80% or more of the distance between the battery cells.

The number of cells included in the presently disclosed battery module is not specifically limited and may be 2 or more, preferably 4 or more, and more preferably 8 or more, for example, and may be 100 or less, preferably 50 or less, and more preferably 20 or less, for example. The distance between battery cells in the presently disclosed battery module may be 1 mm or more, preferably 2 mm or more, and more preferably 3 mm or more, for example, and may be 20 mm or less, preferably 10 mm or less, and more preferably 5 mm or less, for example.

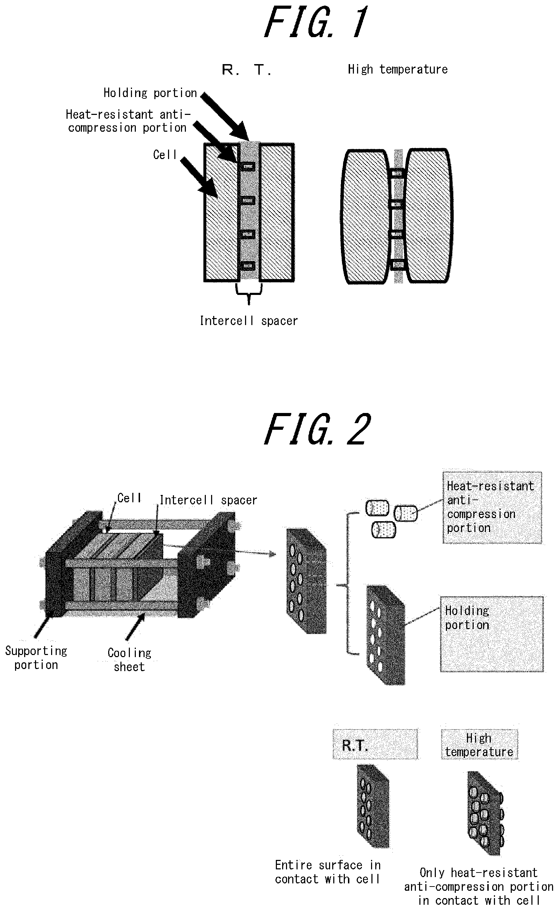

The presently disclosed battery module may further include a heat releasing portion. The heat releasing portion is a portion for externally releasing high temperature that has accumulated in the battery cells. The heat releasing portion is preferably a portion that is in contact with the battery cells or intercell spacer and that is exposed to the outside of the battery module. The heat releasing portion may form a casing of the battery module or part of a casing of the battery module. The heat releasing portion may be a cooling sheet that serves as a base for arrangement of the battery cells or a support portion that is in contact with the surface of a battery cell positioned at an end in arrangement as illustrated in FIG. 2, for example.

EXAMPLES

The following provides a more detailed description of the present disclosure through examples. However, the present disclosure is not limited to these examples.

Measurement of thermal resistance was performed in order to evaluate the extent to which an intercell spacer inhibits thermal conduction between cells at abnormally high temperature.

<Measurement method of thermal resistance>

Thermal resistance [K·cm$^2$/W] was measured in accordance with standard ASTM D5470. Specifically, using a measurement instrument (TIM Tester 1300), a sample (033 mm) was placed on a cooling plate, was heated by a heater, and the thermal resistance Rt [K·cm$^2$/W] was calculated from the heater temperature $T_1$ [°C], the cooling plate temperature $T_2$ [°C], the heat flow Q [W], and the sample area S [cm$^2$] by the following formula.

$$Rt = (T_1 - T_2) \times S/Q$$

In the examples and comparative example, production was performed such that the distance between aluminum plates before pressing was fixed.

(Example 1)

A water dispersion was produced by kneading polyacrylic acid aqueous solution, boron nitride filler (D50 = 50 $\mu$m), and melamine filler (D50 = 2 $\mu$m) in a planetary mixer such that, in terms of solid content, polyacrylic acid:boron nitride:melamine = 5:4:1. An aluminum plate ($\varnothing$33 mm $\times$ 3 mm in thickness) was loaded into a Teflon® (Teflon is a registered trademark in Japan, other countries, or both) petri dish, the water dispersion was added onto the aluminum plate, and then zirconia balls (03 mm) were added such as to not overlap. The amount of the water dispersion was adjusted such that the thickness after drying was within a range of 1.0 times to 1.2 times the diameter of the zirconia balls. After drying, the resin filler mixture sheet was removed with the exception of a portion thereof overlapping with the aluminum plate, and thus a composite material of an aluminum plate and resin was obtained. An aluminum plate ($\varnothing$33 mm $\times$ 3 mm in thickness) was placed on top of the composite material, and pressing was performed at 5 MPa to obtain an aluminum plate-intercell spacer sample composite that was sandwiched by aluminum plates at both sides.

The thermal resistance of the composite was measured under pressing at 5 MPa. The composite was then heated to 300°C for 1 hour under pressing at 5 MPa, and the thermal resistance thereof was measured once again under pressing at 5 MPa after heating.

A thermal resistance change ratio was calculated as follows.

$$\text{Thermal resistance change ratio} = \text{Thermal resistance (after heating)/Thermal resistance (before heating)}$$

The spacer distance after heating was measured as the distance between the aluminum plates under pressing at 5 MPa. The intercell distance after heating was evaluated as follows.

Good: Distance after heating is 50% or more of distance before heating
Poor: Distance after heating is less than 50% of distance before heating

(Comparative Example 1)

An aluminum plate-sample composite was obtained by the same method as in Example 1 with the exception that zirconia balls (03 mm) were not added.

The results are shown in Table 2.

Table 2

| Raw materials and evaluation results of intercell spacer samples of Example 1 and Comparative Example 1 | | | |
|---|---|---|---|
| | | Example 1 | Comparative Example 1 |
| Raw materials | Heat-resistant anti-compression portion | Zirconia balls (03 mm) | |
| | Holding portion: main material | Boron nitride, polyacrylic acid | ←Same |
| | Holding portion: thermally dissipated material | Melamine | Melamine |
| Evaluations | Thermal resistance change ratio | 25 | 6 |
| | Spacer distance (after heating) | Good | Poor |

(Example 2)

(2-1) Production of carboxyl group-containing highly saturated nitrile rubber (a1)

A reactor was charged, in order, with 220 parts of deionized water, 5 parts of sodium dodecylbenzenesulfonate aqueous solution of 10% in concentration, 37 parts of acrylonitrile, 4 parts of mono-n-butyl maleate, and 0.75 parts of t-dodecyl mercaptan (molecular weight modifier), gas inside of the reactor was purged with nitrogen three times, and then 57 parts of 1,3-butadiene was added. The reactor was held at 10°C while adding 0.06 parts of cumene hydroperoxide (polymerization initiator), a reductant, and an appropriate amount of a chelating agent and was stirred while continuing a polymerization reaction. Mono-n-butyl maleate was added in an amount of 1 part at points at which the polymerization conversion rate reached 40% and 60%, and hydroquinone aqueous solution (polymerization inhibitor) of 10 mass% in concentration was added in an amount of 0.1 parts at a point at which the polymerization conversion rate reached 85% so as to stop the polymerization reaction. Next, residual monomer was removed at a water temperature of 60°C to yield a latex of nitrile rubber (solid content concentration 30 weight%).

An autoclave was charged with the latex of nitrile rubber obtained as described above and a palladium catalyst (solution obtained by mixing 1 weight% palladium acetate acetone solution with an equal weight of deionized water) such that the palladium content was 1,000 ppm relative to the dry weight of rubber contained in the latex of nitrile rubber, and was used to perform a hydrogenation reaction at a hydrogen pressure of 3 MPa and a temperature of 50°C for 6 hours to yield a latex of carboxyl group-containing highly saturated nitrile rubber (a1).

The obtained latex of the carboxyl group-containing highly saturated nitrile rubber (a1) was coagulated through addition of 2 volume equivalents of methanol and was subsequently vacuum dried at 60°C for 12 hours to obtain the carboxyl group-containing highly saturated nitrile rubber (a1). The obtained carboxyl group-containing highly saturated nitrile rubber (a1) had a carboxyl group content of 0.030 ephr, an iodine value of 9, and a polymer Mooney viscosity [ML1+4, 100°C] of 44. The obtained carboxyl group-containing highly saturated nitrile rubber (a1) comprised 35.7 weight% of acrylonitrile units, 58.6 weight% of butadiene units (inclusive of hydrogenated parts), and 5.7 weight% of mono-n-butyl maleate units.

(2-2) Production of elastic portion (rubber sheet)

A Banbury mixer was used to add 40 parts of FEF carbon (produced by Tokai Carbon Co., Ltd.; product name: Seast SO), 5 parts of tri-2-ethylhexyl trimellitate (produced by Adeka Corporation; product name: ADK CIZER C-8; plasticizer), 1.5 parts of 4,4'-di-($\alpha,\alpha$-dimethylbenzyl)diphenylamine (produced by Ouchi Shinko Chemical Industrial Co., Ltd.; product name: NOCRAC CD; antioxidant), 1 part of stearic acid, and 1 part of polyoxyethylene alkyl ether phosphoric acid ester (produced by TOHO Chemical Industry Co., Ltd.; product name: Phosphanol RL210; processing aid) to 100 parts of the carboxyl group-containing highly saturated nitrile rubber (a1) and perform 5 minutes of mixing thereof at 50°C. Next, the resultant mixture was transferred to a 50°C roll, and 4 parts of 1,8-diazabicyclo[5.4.0]undec-7-ene (DBU) (produced by Rhein Chemie; product name: RHENOGRAN XLA-60 (GE2014); DBU 60% (inclusive of portion forming zinc dialkyl diphosphate salt); basic cross-linking accelerator) and 2.4 parts of hexamethylenediamine carbamate (produced by DuPont Dow Elastomers; product name: Diak #1; polyamine cross-linker belonging to aliphatic polyvalent amines) were compounded and kneaded therewith to obtain a nitrile rubber composition. The nitrile rubber composition produced as described above by the method described above was used to obtain a rubber cross-linked product. The cross-linked product was molded and thermally cross-linked to obtain a rubber sheet of 1 mm in thickness.

(2-3) Production of intercell spacer

Polyacrylic acid aqueous solution and melamine filler (D50 = 2 $\mu$m) were kneaded by a planetary mixer such that, in terms of solid content, polyacrylic acid:melamine = 1:7. Thereafter, zirconia balls (D50 = 0.8 mm) were added such that, in terms of solid content, polyacrylic acid:zirconia = 1:2, and were hand mixed to produce a water dispersion. An aluminum plate ($\varnothing$33 mm $\times$ 3 mm in thickness) was placed in a Teflon® petri dish, the water dispersion was added onto the aluminum plate such as to have a thickness of 1 mm after dry pressing, and, after drying, the resin filler mixture sheet was removed with the exception of a section overlapping with the aluminum plate so as to obtain a composite material of an aluminum plate and resin. Two composite material sheets were produced as described above.
The prepared rubber sheet (thickness 1 mm) was sandwiched between the two composite material sheets, and then pressing was performed at 5 MPa to obtain an aluminum plate-intercell spacer sample composite that was sandwiched by aluminum plates at both sides.
The thermal resistance of the composite was measured under pressing at 5 MPa. The composite was then heated to 300°C for 1 hour under pressing at 5 MPa, and the thermal resistance thereof was measured once again under pressing at 5 MPa after heating.
A thermal resistance change ratio was calculated as follows.

$$\text{Thermal resistance change ratio} = \text{Thermal resistance (after heating)}/\text{Thermal resistance (before heating)}$$

The spacer distance after heating was measured as the distance between the aluminum plates under pressing at 5 MPa. The intercell distance after heating was evaluated as follows.

Good: Distance after heating is 50% or more of distance before heating
Poor: Distance after heating is less than 50% of distance before heating

The results are shown in Table 3.

Table 3

| Raw materials and evaluation results of intercell spacer sample of Example 2 | | |
|---|---|---|
| | | Example 2 |
| Raw materials | Heat-resistant anti-compression portion | Zirconia balls ($\varnothing$0.8 mm) |
| | Holding portion: main material | Polyacrylic acid |
| | Holding portion: thermally conductive filler | - |
| | Holding portion: thermally dissipated filler | Melamine |
| | Elastic portion | Rubber sheet (1 mm) |

(continued)

| Raw materials and evaluation results of intercell spacer sample of Example 2 | | |
|---|---|---|
| | | Example 2 |
| Evaluations | Thermal resistance change ratio | 38 |
| | Spacer distance (after heating) | Good |

INDUSTRIAL APPLICABILITY

According to the present disclosure, it is possible to provide an intercell spacer that can maintain intercell distance even in a situation in which a cell has expanded inside a battery module at abnormally high temperature.
Moreover, according to the present disclosure, it is possible to provide a battery module that can maintain intercell distance even in a situation in which a cell has expanded therein at abnormally high temperature.

**Claims**

1.   An intercell spacer arranged between battery cells that are adjacent to each other, having a heat-resistant anti-compression portion having a Young's modulus of 10 MPa or more at a temperature of 300°C in a direction in which the battery cells are adjacent.

2.   The intercell spacer according to claim 1, wherein the heat-resistant anti-compression portion is formed of at least one selected from the group consisting of a polyimide resin, a phenolic resin, an epoxy resin, alumina, zirconia, boehmite (AlOOH), gibbsite ($Al(OH)_3$), silicon oxide, magnesium oxide (magnesia), calcium oxide, titanium oxide (titania), barium titanate, alumina-silica complex oxide, aluminum nitride, boron nitride, silicon, diamond, barium sulfate, calcium fluoride, barium fluoride, kaolinite, montmorillonite, bentonite, mica, and feldspar.

3.   The intercell spacer according to claim 1 or 2, wherein the heat-resistant anti-compression portion has a volume resistivity of $1 \times 10^3$ $\Omega$·cm or more in the direction in which the battery cells are adjacent.

4.   The intercell spacer according to any one of claims 1 to 3, wherein the heat-resistant anti-compression portion has a thermal conductivity of 100 W/m·K or less in the direction in which the battery cells are adjacent.

5.   The intercell spacer according to any one of claims 1 to 4, further having a holding portion that at least partially covers the heat-resistant anti-compression portion.

6.   The intercell spacer according to claim 5, wherein a thermal conductivity of the holding portion is higher than a thermal conductivity of the heat-resistant anti-compression portion.

7.   The intercell spacer according to claim 5 or 6, wherein the holding portion has a portion that extends between surfaces that are in contact with the battery cells.

8.   The intercell spacer according to any one of claims 5 to 7, wherein the heat-resistant anti-compression portion is embedded in the holding portion.

9.   The intercell spacer according to any one of claims 5 to 7, wherein at least one of surfaces that are in contact with the battery cells is constituted by the heat-resistant anti-compression portion and the holding portion.

10.   The intercell spacer according to claim 9, wherein both of the surfaces that are in contact with the battery cells are constituted by the heat-resistant anti-compression portion and the holding portion.

11.   The intercell spacer according to claim 5 or 6, wherein a dimension of the heat-resistant anti-compression portion in the direction in which the battery cells are adjacent is larger than a dimension of the holding portion in the direction in which the battery cells are adjacent.

12.   The intercell spacer according to any one of claims 5 to 11, wherein the holding portion comprises a member for which thermal conductivity irreversibly decreases upon heating.

13. The intercell spacer according to claim 12, wherein thermal conductivity of the holding portion upon heating to a temperature of 300°C is 0.1 times or less thermal conductivity of the holding portion in an unheated state at a temperature of 25°C.

14. The intercell spacer according to claim 12 or 13, wherein the holding portion comprises a member for which density decreases upon heating.

15. The intercell spacer according to claim 14, wherein the member for which density decreases upon heating is a thermally disappearing filler.

16. The intercell spacer according to any one of claims 5 to 11, wherein the holding portion comprises a member that contracts upon heating.

17. The intercell spacer according to claim 16, wherein the member that contracts upon heating is an elastomeric polymer.

18. The intercell spacer according to any one of claims 5 to 17, further having an elastic portion.

19. The intercell spacer according to claim 18, wherein the elastic portion has a smaller Young's modulus than the heat-resistant anti-compression portion at a temperature of 25°C.

20. The intercell spacer according to claim 18 or 19, wherein the heat-resistant anti-compression portion and the holding portion are arranged at a surface side of the elastic portion.

21. The intercell spacer according to any one of claims 18 to 20, wherein the holding portion contains a thermally disappearing filler, and a proportion of a volume occupied by the thermally disappearing filler relative to a volume of the holding portion is 50% or more.

22. A battery module having:

    a plurality of battery cells; and
    the intercell spacer according to any one of claims 1 to 21 arranged between adjacent battery cells.

23. The battery module according to claim 22, wherein a dimension of the heat-resistant anti-compression portion in the direction in which the battery cells are adjacent is 50% or more of a distance between the battery cells.

## FIG. 1

R. T.                    High temperature

Holding portion
Heat-resistant anti-
  compression portion
Cell

Intercell spacer

## FIG. 2

Cell    Intercell spacer

Heat-resistant
anti-
compression
portion

Holding
portion

Supporting      Cooling
portion         sheet

R.T.            High
                temperature

Entire surface in      Only heat-resistant
contact with cell    anti-compression portion
                       in contact with cell

## FIG. 3

# FIG. 4

| | | | Embodiment 2-3 | Embodiment 2-4 | Embodiment 2-5 | Embodiment 3 | Embodiment 4 |
|---|---|---|---|---|---|---|---|
| Configuration | Normal temperature | A-view (perspective) Cell at one side omitted | | | | | |
| | | B-view | | | | | |
| | | C-view | | | | | |
| | | D-view | | | | | |
| | High temperature | B-view | | | | | |

# FIG. 5

| | | Embodiment 5 | Embodiment 6 | Embodiment 7 | Embodiment 8 |
|---|---|---|---|---|---|
| Normal temperature | A-view (perspective) Cell at one side omitted | | | | |
| | B-view | | | | |
| | C-view | | | | |
| | D-view | | | | |
| High temperature | B-view | | Same as at normal temperature | Same as at normal temperature | Same as at normal temperature |

# *FIG. 6*

| | | | Embodiment 9 | Embodiment 10 | Embodiment 11 | Embodiment 12 |
|---|---|---|---|---|---|---|
| Configuration | Normal temperature | A-view (perspective) Cell at one side omitted | | | | |
| | | B-view | | | | |
| | | C-view | | | | |
| | | D-view | | | | |
| | High temperature | B-view | | Same as at normal temperature | Same as at normal temperature | Same as at normal temperature |

# FIG. 7

| Example 1 | Example 2 | Comparative Example 1 |
|---|---|---|
| Heat-resistant anti-compression portion / Holding portion | Holding portion + Heat-resistant anti-compression portion / Elastic portion | Holding portion |

# FIG. 8

Cell    Intercell spacer

*FIG. 9*

A

B

## INTERNATIONAL SEARCH REPORT

| International application No. |
|---|
| PCT/JP2020/049254 |

A. CLASSIFICATION OF SUBJECT MATTER
Int.Cl. H01M50/20(2021.01)i, H01M10/613(2014.01)i, H01M10/6554(2014.01)i
FI: H01M2/10E, H01M10/6554, H01M10/613

According to International Patent Classification (IPC) or to both national classification and IPC

B. FIELDS SEARCHED

Minimum documentation searched (classification system followed by classification symbols)
Int.Cl. H01M50/20, H01M10/613, H01M10/6554

Documentation searched other than minimum documentation to the extent that such documents are included in the fields searched
Published examined utility model applications of Japan       1922-1996
Published unexamined utility model applications of Japan     1971-2021
Registered utility model specifications of Japan             1996-2021
Published registered utility model applications of Japan     1994-2021

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2010-97693 A (TOYOTA MOTOR CORPORATION) 30 April 2010 (2010-04-30), paragraphs [0020], [0030]-[0033], [0045]-[0059], fig. 1-3 | 1-14, 22-23<br>15-21 |
| X<br>Y | JP 2009-277575 A (TOYOTA MOTOR CORPORATION) 26 November 2009 (2009-11-26), paragraphs [0004]-[0006], [0009], [0013]-[0058], fig. 1-9 | 1-11, 22-23<br>18-20 |
| X<br>A | JP 2010-165597 A (TOYOTA MOTOR CORPORATION) 29 July 2010 (2010-07-29), paragraphs [0008], [0009], [0033], [0055]-[0067], fig. 4, 5 | 1-6, 22-23<br>7-21 |
| Y | JP 2012-142288 A (SB LIMOTIVE CO., LTD.) 26 July 2012 (2012-07-26), claim 1, paragraphs [0005], [0047]-[0068], fig. 1-3D | 18-20 |

☒ Further documents are listed in the continuation of Box C.    ☒ See patent family annex.

| | |
|---|---|
| *   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>09 March 2021 | Date of mailing of the international search report<br>23 March 2021 |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

International application No.

PCT/JP2020/049254

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2006-147531 A (NISSAN MOTOR CO., LTD.) 08 June 2006 (2006-06-08), paragraphs [0019]-[0021], fig. 5, 6 | 1-23 |

Form PCT/ISA/210 (second sheet) (January 2015)

27

INTERNATIONAL SEARCH REPORT
Information on patent family members

| International application No. |
|---|
| PCT/JP2020/049254 |

| | | |
|---|---|---|
| JP 2010-97693 A | 30 April 2010 | (Family: none) |
| JP 2009-277575 A | 26 November 2009 | (Family: none) |
| JP 2010-165597 A | 29 July 2010 | US 2011/0070476 A1<br>paragraphs [0012], [0013],<br>[0065]-[0077], fig. 4, 5<br>EP 2381525 A1<br>CN 102171883 A |
| JP 2012-142288 A | 26 July 2012 | US 2012/0171554 A1<br>claim 1, paragraphs [0009],<br>[0068]-[0089], fig. 1-3D<br>EP 2472633 A1<br>CN 102593390 A<br>KR 10-2012-0079441 A |
| JP 2006-147531 A | 08 June 2006 | (Family: none) |

Form PCT/ISA/210 (patent family annex) (January 2015)

28

**EP 4 113 714 A1**

**Patent documents cited in the description**

- WO 2018062172 A1
- JP 2011503793 A
- JP 2002134666 A
- JP 2019131654 A
- JP 2007299544 A
- JP 2000067825 A
- JP H8148187 A
- JP 2015218282 A
- WO 2013111345 A1